# EUROPEAN PATENT SPECIFICATION

(11) **EP 3 130 420 B1**
(45) Date of publication and mention of the grant of the patent: **06.11.2019**
(21) Application number: 15180856.5
(22) Date of filing: 13.08.2015
(51) Int. Cl.: B23D 49/16, B23D 51/04, B23D 49/00, B27B 11/10

(54) **RECIPROCAL SAW WITH CLAMP AND METHODS OF USE**
STICHSÄGE MIT KLEMME UND VERFAHREN ZUR VERWENDUNG
SCIE ALTERNATIVE AVEC DISPOSITIF DE BLOCAGE ET PROCÉDÉS D'UTILISATION

(43) Date of publication of application: 15.02.2017
(73) Proprietor: Techtronic Outdoor Products Technology Limited, Hamilton HM12 (BM)
(72) Inventor: LAU, Ka Chun, Tsuen Wan, Hong Kong (HK)
(74) Representative: Stevenson-Hill, Jack Patrick

(56) References cited:
- EP-A2- 0 856 372
- CN-A- 103 537 758
- CN-A- 103 895 068
- CN-U- 203 109 348
- DE-U1- 8 507 971

## Description

### FIELD OF THE INVENTION

The present invention relates to a reciprocal saw having a clamp and methods of use therefor. More specifically, the present invention relates to a reciprocal saw for cutting an item according to the preamble of claim 1, said saw having a clamp for holding an item to be cut and relates also to methods of use therefor.

### BACKGROUND

Such a reciprocal saw is known from CN103895068A.

Reciprocal saws exist for the purpose of cutting items such as wood, branches, piping, etc. In some cases the item to be cut has a round or tubular shape which can make it difficult to start cutting and/or to cut the item without it moving, rolling, etc. Accordingly, the user may have to hold the reciprocal saw with one hand while holding the item with the other hand. Such a position can lead to a loss of balance, slippage, etc.

As a result, various clamps have been produced which hold an item to be cut while the reciprocal saw cuts through it. However, such existing clamps tend to either still require the use of the other hand, or utilize a spring-loaded lever which must be then depressed by the user's thumb, or other finger in order to open so as to accept and hold the item to be cut. Such methods require special coordination and effort.

Accordingly, the need remains for a clamp which may be used without the need for an additional hand, or by triggering it with a finger or thumb. The need also remains for an intuitive and instinctive method for inserting an item to be cut into a clamp.

According to its abstract, CN-A-103537758 describes a power tool which comprises a shell body, a motor contained in the shell body and a supporting part. The supporting part is arranged on the shell body and is used for supporting a workpiece. The motor drives a working head to move in a present working zone. The power tool further comprises a clamping device used for clamping the workpiece. The clamping device comprises a connecting piece connected with the shell body and a locking piece connected with the connecting piece. The locking piece is provided with a locking part which can be used for abutting against the workpiece.; The connecting piece and the shell body are movably connected, so that the locking part moves between two position, at the first position, the locking part is placed in the working zone and is used for abutting against the workpiece, and at the second position, the locking part is placed outside the working zone. At the first position, the locking part abuts against the workpiece, vibration of the workpiece can be lowered, at the second position, the locking part moves out of the working zone, and the problem that the clamping device hinders machining on the workpiece by the working head can be avoided.

Document EP-A-0856372 also discloses a reciprocal saw according to the preamble of claim 1 and describes a powered reciprocating saw, in particular a pruning saw. To simplify use of the saw a clamping mechanism is provided which holds an object in position while it is sawn. The clamping mechanism is mounted at the front portion 4 of the housing of the saw near the saw blade 20. The clamping mechanism comprises: a slide element 30 for sliding movement in cutting direction C of the saw blade, a supporting member 30; and a clamping arm 40 being rotatably mounted on the slide element 30, by means of a one way rotary clutch 42 such that the arm can freely rotate in one direction only, in which direction the clamping arm 40 moves towards the support member 30 to clamp an object therebetween in a clamping position below the saw blade for sawing it. When the saw is in use, it vibrates due to its reciprocating parts. Since the clamping arm 40 has a moment of inertia with respect to this axis of rotation of the one way rotary clutch 42, the oscillating movement is transformed into a stepwise, progressive rotational movement of the clamping arm which thereby closes automatically to clamp an object to be sawn.

### SUMMARY OF THE INVENTION

According to the invention, there is provided a reciprocal saw for cutting an item defined by the features of claim 1. Further preferred embodiments are defined by the features of claims 2-12.

An embodiment of the present invention relates to a method for holding an item by providing a reciprocal saw as described above with the clamp in the closed position, placing an item into the receiving area, and moving the reciprocal saw such that the item pulls the clamp jaw into the open position such that the clamp jaw holds the item.

An embodiment of the present invention relates to a method of cutting an item by providing a reciprocal saw according to Claim 1 where the clamp is in the closed position, placing an item into the receiving area, moving the reciprocal saw such that the item pulls the clamp jaw into the open position such that the clamp jaw holds the item, and then cutting the item with the cutting blade.

Without intending to be limited by theory, it is believed that the present invention allows easy, convenient, and intuitive one-handed cutting of an item with a reciprocal saw. By placing the item in the receiving area and then slightly pulling the reciprocal saw away from the item, the clamp jaw opens allowing the item to naturally slip between the clamp jaw and the chassis and adjacent to the cutting blade. This all can be done without needing to use a thumb or other finger to trigger the opening of the clamp jaws. Such a convenient and intuitive manipulated method is easy for the user, even when using the reciprocal saw in a position such as in a tree, or other position where safety is of paramount importance.

### BRIEF DESCRIPTION OF THE DRAWINGS

Fig. 1 shows a partially-cut-away view of an embodiment of the reciprocating saw of the present invention;
Fig. 2 shows a side-view of the reciprocal saw of Fig. 1 in-use;
Fig. 3 shows a side-view of the reciprocal saw of Fig. 1 in-use where the item is ready to be cut;
Fig. 4 shows a side-view of the reciprocal saw of Fig. 1 in-use when the item is partially-cut; and
Fig. 5 shows a front perspective view of an embodiment of a reciprocal saw having a clamp and a second clamp on the opposite side of the cutting blade from the clamp.

The figures herein are for illustrative purposes only and are not necessarily drawn to scale.

### DESCRIPTION OF THE PREFERRED EMBODIMENTS

Unless otherwise specifically provided, all tests herein are conducted at standard conditions which include a room and testing temperature of 25 °C, sea level (1 atm.) pressure, pH 7, and all measurements are made in metric units. Furthermore, all percentages, ratios, etc. herein are by weight of the final object, unless specifically indicated otherwise.

An embodiment of the present invention relates to a reciprocal saw for cutting an item as defined by the features of claim 1.

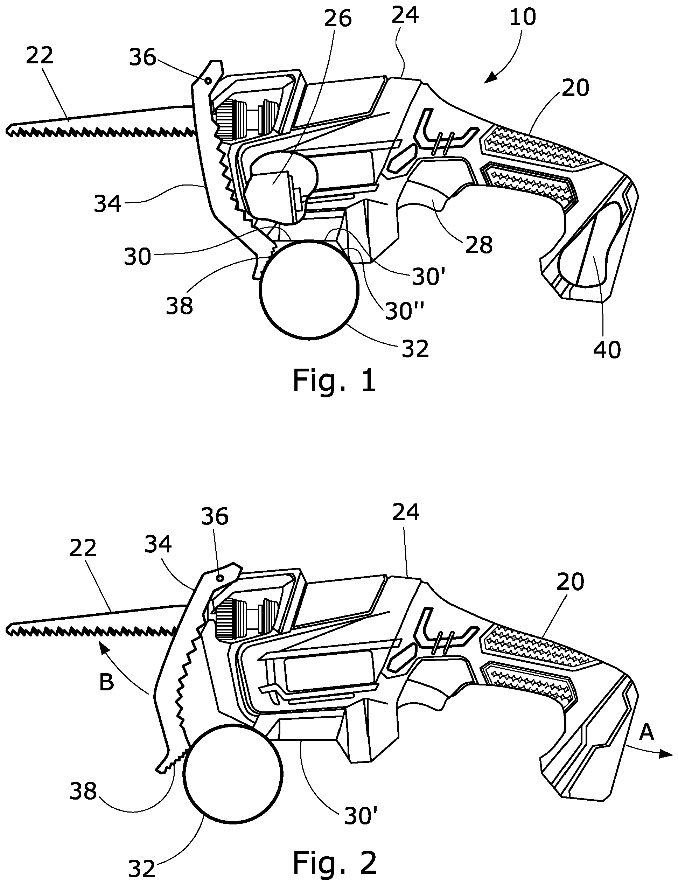

Turning to the Figures, Fig. 1 shows a partially-cut-away side-view of an embodiment of the reciprocating saw, 10, of the present invention. The reciprocating saw, 10, has a handle, 20, and a cutting blade, 22, distal from the handle, 20. The cutting blade, 22, is typically removable and replaceable in case it becomes dull, breaks, etc. Such cutting blades are well-known in the art.

A chassis, 24, is located between the handle, 20, and the cutting blade, 22 and connects them. The chassis, 24, also contains a motor, 26, therein, which is typically an electric motor, although other motors are also useful herein. The motor, 26, drives the cutting blade, 22, in a reciprocating motion. The chassis, 24, also contains a switch, 28, which completes the electrical circuit to turn on the motor, 26.

The chassis, 24, also contains a receiving area, 30, which in this case is an indentation 30', that is sized and shaped to be able to receive an item, 32, intended to be cut by the cutting blade. In Fig. 1, the indentation is a two-sided arrangement having 30' and 30" connected by an obtuse angle. Without intending to be limited by theory, it is believed that this obtuse angle allows the item, 32, to more easily fit into the indentation, 30', and to slide towards the clamp jaw (see 38). The indentation useful herein may be in a variety of configurations determinable to one skilled in the art, for example, a two-sided arrangement as seen in Fig. 1, a curved or rounded indentation, a flat area which slopes towards the clamp jaw, (see 38), etc. In an embodiment herein, when in the closed position, the clamp jaw forms part of the indentation, and protrudes from the indentation, as seen in Fig. 1. The indentation is typically a concave area (either angled or smooth) of the chassis immediately adjacent to the clamp jaw, when the clamp jaw is in the closed position.

In an embodiment herein, the receiving area of the chassis does not have an indentation, but is substantially flat where the clamp jaw meets the chassis. In such a case, as long as the clamp jaw extends at least a little bit; or from about 3 mm to about 50 mm; or from about 5 mm to about 35 mm; or from about 7 mm to about 30 mm from the chassis when the clamp is in the closed position, then it will still catch the item when the item is slid along the receiving area of the chassis towards the clamp jaw. Then the clamp jaw will open to help guide the item into position closer to the cutting blade.

A clamp, 34, has a pivot, 36, and a clamp jaw, 38, distal from the pivot, 26. The clamp typically has a concave design; or a partially-concave design, so that the clamp can capture and hold the item. The pivot, 36, is also distal from the receiving area, 30, and the indentation, 30'. The pivot, 36, connects the clamp, 34, to the chassis, 24, and also allows the clamp, 36, to rotate between an open position and a closed position. When the clamp is in the closed position as seen in Fig. 1, the clamp jaw, 38, is immediately adjacent to the receiving area, 30, and the indentation, 30', in the chassis, 24.

In this embodiment, the clamp, 34, and the clamp jaw, 38, are serrated so as to better grip the item, 32. The serrations reduce the likelihood that the item will slip and/or rotate during placement and cutting. However, in an embodiment herein the clamp and/or the clamp jaw is not serrated, and may have a smooth, and/or rough texture.

In the invention herein, the item, 32, need not be completely received within the indentation, 30' and 30", as shown in Fig. 1. Instead, the reciprocating saw, 10, herein is intended to cut both small items which may fully be received (and/or whose diameters may be fully received) within the indentation, 30' and 30", as well as larger items which may only partially be received within the indentation, 30' and 30". Furthermore, when designing the reciprocal saw herein, the artisan may be expected to adjust the size, arrangement, angle(s), concavity, and/or orientation of the receiving area, the indentation, the chassis, the clamp and/or the clamp jaw as desired so as to receive any desired size of item for cutting. In an embodiment herein, the reciprocal saw; or the chassis and the clamp; or the receiving area; or the indentation, the clamp and the clamp jaw; are designs such that an item having a diameter of from about 0.5 mm to about 120 mm; or from about 1 mm to about 100 mm; or from about 1.5 mm to about 90 mm may be received within the indentation. As used herein, the phrase "received within the receiving area" indicates that the item simultaneously touches the receiving area as well as the clamp jaw. As used herein, the phrase "received within the indentation" indicates that the item simultaneously touches at least a portion of the indentation as well as the clamp jaw.

The item, 32, herein may be made of a material selected from, for example, wood, plastic, metal, concrete, or a mixture thereof; or wood, plastic, metal and a mixture thereof. In an embodiment of the method herein, the item is selected from a branch, a pipe, a stick, and a combination thereof.

In the embodiment in Fig. 1, the motor, 26, is an electric motor, and it is operatively-connected to a battery, 40, located at the end of the handle, 20, so as to counter-balance the reciprocal saw, 10. The battery, 40, may be removable, replaceable, and/or rechargeable as desired.

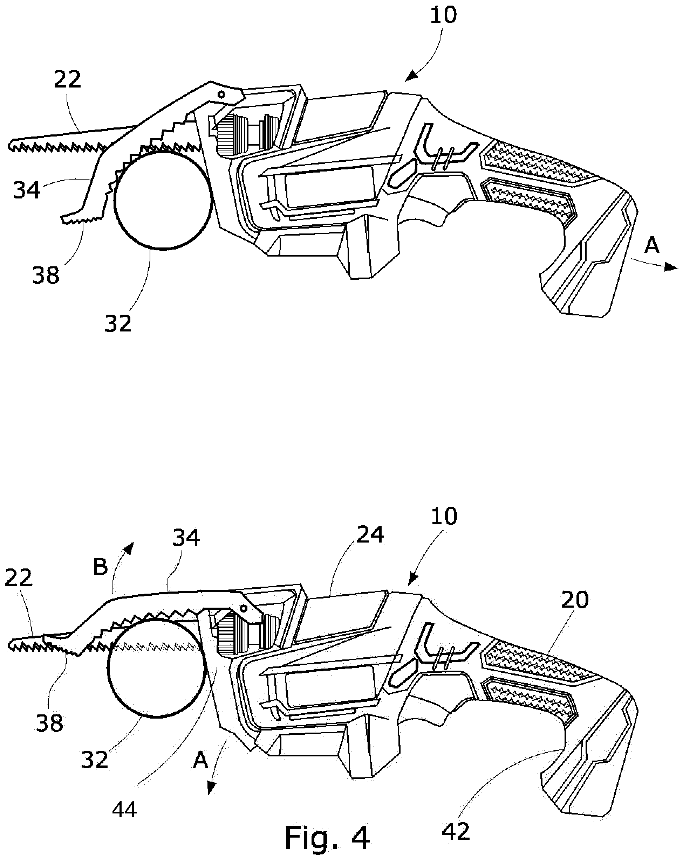

Fig. 2 shows a side-view of the reciprocal saw, 10, of Fig. 1, in-use. Starting from the position in Fig. 1, when the item, 32, is received within the indentation, 30', the user holds the handle, 20, and pulls the reciprocal saw, 10, in the direction of arrow A, then the item, 32, will push against the clamp jaw, 38, and cause the clamp, 34, to move from the closed position of Fig. 1 into the open positions seen in Fig. 2 and Fig. 3. In Fig. 2 this open position is a partially-open position. In the open position, the clamp jaw, 38, is no longer immediately adjacent to the indentation, 30', as the item, 32, is now forcing the clamp , 34, to open and move in the direction of arrow B. This causes the clamp, 34, to open by rotating about the pivot, 36. This brings the item, 32, closer to the cutting blade, 22, and as the clamp, 34, is biased to the closed position, the clamp, 34, holds the item, 32, as it advances towards the cutting blade, 22. The clamp may contain, for example, an internal spring (not shown) to bias the clamp closed. Alternatively, the clamp may push against a resilient piece (not shown) so as to bias the clamp closed. Other methods of biasing the clamp closed are known in the art and easily conceivable by the artisan when designing the reciprocal saw.

Fig. 3 shows a side-view of the reciprocal saw, 10, of Fig. 1 in-use where the item, 32, is ready to be cut. By continuing to pull the reciprocal saw, 10, away from the item, 32, in the direction of arrow A, the item, 32, has naturally moved into a position for cutting as the clamp, 34, continues to move in the direction of arrow B. The clamp, 34, is in the open position and the item, 32, is touching the clamp, 34, the chassis, 24, and the cutting blade, 22. The item, 32, is securely held by the clamp, 34, and is ready to be cut. The clamp, 34, holds the item to prevent shaking and other movement, and in the case of a round item, 32, such as a branch, pipe, dowel, etc. to prevent and/or reduce the rotation of the item, 32, as it is being cut by the cutting blade, 22.

Fig. 4 shows a side-view of the reciprocal saw, 10, of Fig. 1 in-use when the item, 32, is partially-cut. The cutting blade, 22, is partially-through the item, and as the user holds the reciprocating saw by the handle, 20, and pushes it down along the direction of arrow A, the cutting blade, 22, will dig deeper and deeper into the item, 32, until it is cut though.

Fig. 4 also shows a clamp holder, 44, which affixes the clamp, 34, to the chassis, 24. When in use, the clamp, 34, holds the item, 32, against the clamp holder, 44, securely to prevent slippage.

In the embodiment of Fig. 4, a hook, 42, is formed by the handle, 20, such that the reciprocal saw, 10, may be securely hung on a branch, a peg, knob, hanger, etc. when not in use. This hook contains a concave-curve in the handle and thus the centre of gravity will be immediately below the hook when it is hung. Such a hook is a preferred feature, not a required feature.

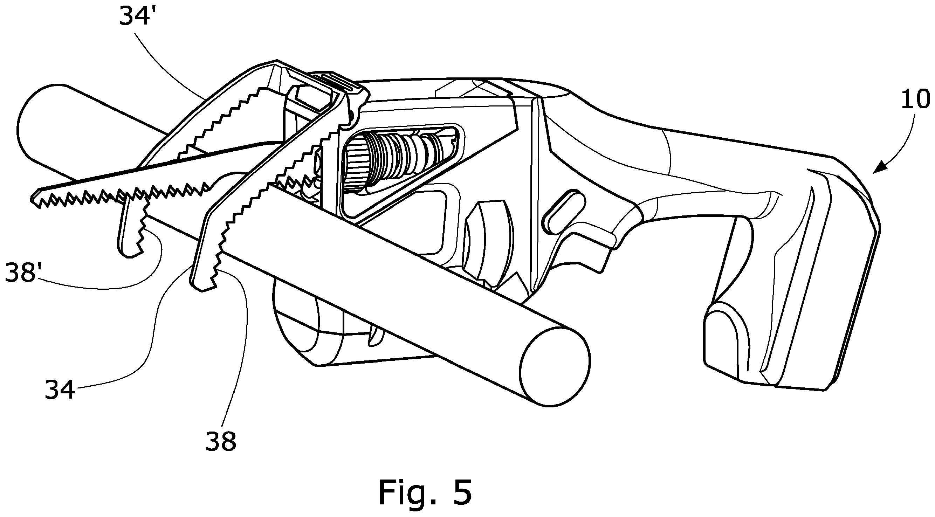

Fig. 5 shows a front perspective view of an embodiment of a reciprocal saw, 10, having a clamp, 34, and a second clamp, 34', on the opposite side of the cutting blade, 22, from the clamp, 34. In such a case, the second clamp will often be a mirror image of the clamp, as seen in Fig. 5 , and with reference to the plane of the cutting blade, 22. The clamp, 34, and the second clamp, 34' both, respectively, contain a clamp jaw, 38, and a second clamp jaw, 38'.

In an embodiment herein, the clamp is permanently-fixed on the chassis. When the clamp is not needed, and/or when cutting an item which is too large for the clamp and/or indentation, then the clamp will remain in the closed position, and the clamp and indentation may thus be ignored. The user may therefore employ the reciprocating saw in the saw way as any other reciprocating saw.

In an embodiment herein, the clamp, and/or the clamp holder is removable from the chassis. In such an embodiment, when the clamp is not needed, it may be removed by, for example, sliding it off of the chassis. In such an embodiment, there may be some type of fastener, such as a rail, a screw, button, clip, lock, or a combination thereof which secures the clamp to the chassis.

The various components and parts of the reciprocal saw herein may be made from materials known in the art, such as plastic, metal, resin, rubber, etc.

### METHOD OF USE

The reciprocal saw herein is intended to hold and/or cut an item, preferably in a secure fashion so as to minimize the potential for injury, incorrect cuts, and such.

In an embodiment of the method herein, a reciprocal saw as described herein is provided, with the clamp in the closed position. An item is received in the receiving area; or the indentation, and the reciprocal saw is moved such that the item contacts the clamp jaw and pulls the clamp into the open position. Typically, when the reciprocal saw is moved in a direction away from the item, the clamp will rotate about the pivot and thereby pull the clamp into the open position. The clamp holds the item; or the clamp holds the item next to the cutting blade (see Fig. 3). The item will typically be contacting the clamp, the cutting blade, and the chassis at this point. If a clamp holder is present, then the item may be contacting the clamp holder in addition to, or instead of contacting the chassis.

In an embodiment of the method herein, a reciprocal saw as described herein is provided, with the clamp in the closed position. An item is received in the receiving area; or the indentation, and the reciprocal saw is moved such that the item contacts the clamp jaw and pulls the clamp into the open position. Typically, when the reciprocal saw is moved in a direction away from the item, the clamp will rotate about the pivot and thereby pull the clamp into the open position. The clamp holds the item; or the clamp holds the item next to the cutting blade (see Fig. 3). The item will typically be contacting the clamp, the cutting blade, and the chassis at this point. If a clamp holder is present, then the item may be contacting the clamp holder in addition to, or instead of contacting the chassis. The item is then cut with the cutting blade.

It should be understood that the above only illustrates and describes examples whereby the present invention may be carried out, and that modifications and/or alterations may be made thereto without departing from the invention as defined by the claims.

## Claims

1. A reciprocal saw (10) for cutting an item comprising:
a. a handle (20);
b. a cutting blade distal from the handle (20);
c. a chassis (24) between the handle (20) and the cutting blade (22), wherein the chassis (24) contains a motor (26) and comprises a receiving area (30) thereupon, wherein the receiving area (30) may receive the item (32),
d. a clamp (34) attached to the chassis (24) proximal to the cutting blade (22), the clamp (34) having an open position and a closed position, wherein the clamp has a pivot (36) and a clamp jaw (38) distal from the pivot (36), wherein in the closed position the clamp jaw (38) is adjacent to the receiving area (30), wherein in the open position the clamp jaw (38) is not adjacent to the receiving area (30), wherein when the reciprocal saw (10) is moved, the item (32) may be held by the clamp (34); and wherein the clamp jaw holds the item (32) against the chassis (24), and wherein when the item (32) is received within the receiving area (30), **characterized by**
when the handle (20) is moved in a direction away from the item then the item (32) pulls the clamp jaw (38) into the open position and the clamp jaw then holds the item.

2. The reciprocal saw (10) according to Claim 1, wherein the chassis (24) further comprises a clamp holder (44) for affixing the clamp to the chassis (24), wherein the clamp jaw (38) holds the item (32) against the clamp holder (44).

3. The reciprocal saw (10) according to any of the preceding claims, wherein the item (32) is a wooden item; optionally wherein the wooden item is selected from the group consisting of a branch, a pipe, a stick, and a combination thereof.

4. The reciprocal saw (10) according to any of the preceding claims, wherein the clamp jaw (38) holds the item (32) as it is being cut by the cutting blade (22).

5. The reciprocal saw (10) according to any of the preceding claims, wherein the clamp (34) is biased to the closed position.

6. The reciprocal saw (10) according to any of the preceding claims, wherein the clamp (34) is permanently-fixed on the chassis (24).

7. The reciprocal saw (10) according to any of the preceding claims, wherein the clamp (34) is removable from the chassis (24).

8. The reciprocal saw (10) according to any of the preceding claims, wherein when the clamp (34) is in the closed position the clamp jaw (38) forms part of the receiving area (30) and wherein the clamp jaw (38) protrudes from the receiving area (30).

9. The reciprocal saw (10) according to any of the preceding claims, further comprising a motor for driving the cutting blade (22), and wherein the motor is located within the chassis (24); optionally wherein the motor is an electric motor (26) and wherein the reciprocal saw comprises a battery (40) operatively-connected to the electric motor.

10. The reciprocal saw (10) according to any of the preceding claims, wherein the pivot (36) is distal from the receiving area (30).

11. The reciprocal saw (10) according to any of the preceding claims, further comprising a second clamp on the opposite side of the cutting blade (22) from the clamp (34); optionally wherein the second clamp jaw is a mirror-image of the clamp jaw (38).

12. The reciprocal saw (10) according to any of the preceding claims,
wherein the handle (20) further comprises a hook (42);
and/or
wherein the receiving area (30) comprises an indentation (30') adjacent to the clamp jaw (38) when the clamp (34) is in the closed position; optionally wherein the item (32) is received within the indentation and when the handle (20) is moved in a direction away from the item then the item (32) pulls the clamp jaw (38) into the open position and the clamp jaw (38) then holds the item (32).

13. A method for holding an item (32) comprising the steps of:
a. providing a reciprocal saw (10) according to any of the preceding claims, wherein the clamp (34) is in the closed position;
b. receiving an item in the receiving area (30); and
c. moving the reciprocal saw such that the item (32) contacts the clamp jaw (38) and pulls the clamp (34) into the open position and wherein the clamp (34) holds the item (32);
wherein the item contacts the clamp (34), the cutting blade (22) and the chassis (24).

14. A method for cutting an item (32) comprising the steps of:
a. providing a reciprocal saw (10) according to any of the preceding claims, wherein the clamp (34) is in the closed position;
b. receiving an item (32) into the receiving area (30);
c. moving the reciprocal saw such that the item contacts the clamp jaw (38) and pulls the clamp (34) into the open position and wherein the clamp (34) holds the item (32); and
d. cutting the item (32) with the cutting blade (22);
wherein the item contacts the clamp (34), the cutting blade (22) and the chassis (24).

15. The method according to either one of Claims 13 or 14, wherein the reciprocal saw (10) is moved in a direction away from the item (32) so as to rotate the clamp (34) about the pivot (36) and to thereby pull the clamp (34) into the open position.

## Patentansprüche

1. Stichsäge (10) zum Schneiden eines Gegenstandes, die Folgendes umfasst:
a. einen Handgriff (20),
b. eine Schneidklinge, distal von dem Handgriff (20),
c. ein Gehäuse (24) zwischen dem Handgriff (20) und der Schneidklinge (22), wobei das Gehäuse (24) einen Motor (26) enthält und einen Aufnahmebereich (30) auf demselben umfasst, wobei der Aufnahmebereich (30) den Gegenstand (32) aufnehmen kann,
d. eine Klemme (34), die proximal zu der Schneidklinge (22) an dem Gehäuse (24) befestigt ist, wobei die Klemme (34) eine offene Stellung und eine geschlossene Stellung aufweist, wobei die Klemme ein Drehgelenk (36) und eine Klemmbacke (38), distal von dem Drehgelenk (36), aufweist, wobei in der geschlossenen Stellung die Klemmbacke (38) dem Aufnahmebereich (30) benachbart ist, wobei in der offenen Stellung die Klemmbacke (38) dem Aufnahmebereich (30) nicht benachbart ist, wobei, wenn die Stichsäge (10) bewegt wird, der Gegenstand (32) durch die Klemme (34) gehalten werden kann; und wobei die Klemmbacke den Gegenstand (32) gegen das Gehäuse (24) hält, und wobei, wenn der Gegenstand (32) innerhalb des Aufnahmebereichs (30) aufgenommen wird, **dadurch gekennzeichnet, dass**,
wenn der Handgriff (20) in einer Richtung, weg von dem Gegenstand, bewegt wird, der Gegenstand (32) dann die Klemmbacke (38) in die offene Stellung zieht und die Klemmbacke dann den Gegenstand hält.

2. Stichsäge (10) nach Anspruch 1, wobei das Gehäuse (24) ferner einen Klemmenhalter (44) zum Befestigen der Klemme an dem Gehäuse (24) umfasst, wobei die Klemmbacke (38) den Gegenstand (32) gegen den Klemmenhalter (44) hält.

3. Stichsäge (10) nach einem der vorhergehenden Ansprüche, wobei der Gegenstand (32) ein hölzerner Gegenstand ist, wahlweise wobei der hölzerne Gegenstand ausgewählt ist aus der Gruppe, die aus einem Ast, einem Rohr, einem Stab und einer Kombination derselben besteht.

4. Stichsäge (10) nach einem der vorhergehenden Ansprüche, wobei die Klemmbacke (38) den Gegenstand (32) hält, wenn er durch die Schneidklinge (22) geschnitten wird.

5. Stichsäge (10) nach einem der vorhergehenden Ansprüche, wobei die Klemme (34) zu der geschlossenen Stellung vorgespannt wird.

6. Stichsäge (10) nach einem der vorhergehenden Ansprüche, wobei die Klemme (34) dauerhaft an dem Gehäuse (24) befestigt ist.

7. Stichsäge (10) nach einem der vorhergehenden Ansprüche, wobei die Klemme (34) von dem Gehäuse (24) abnehmbar ist.

8. Stichsäge (10) nach einem der vorhergehenden Ansprüche, wobei, wenn sich die Klemme (34) in der geschlossenen Stellung befindet, die Klemmbacke (38) einen Teil des Aufnahmebereichs (30) bildet und die Klemmbacke (38) von dem Ausnahmebereich (30) vorspringt.

9. Stichsäge (10) nach einem der vorhergehenden Ansprüche, die ferner einen Motor zum Antreiben der Schneidklinge (22) umfasst und wobei der Motor innerhalb des Gehäuses (24) angeordnet ist, wahlweise wobei der Motor ein Elektromotor (26) ist und wobei die Stichsäge eine Batterie (40) umfasst, die wirksam mit dem Elektromotor verbunden ist.

10. Stichsäge (10) nach einem der vorhergehenden Ansprüche, wobei sich das Drehgelenk (36) distal von dem Aufnahmebereich (30) befindet.

11. Stichsäge (10) nach einem der vorhergehenden Ansprüche, die ferner eine zweite Klemme auf der von der Klemme (34) entgegengesetzten Seite der Schneidklinge (22) umfasst, wahlweise wobei die zweite Klemmbacke ein Spiegelbild der Klemmbacke (38) ist.

12. Stichsäge (10) nach einem der vorhergehenden Ansprüche,
wobei der Handgriff (20) ferner einen Haken (42) umfasst und/oder
wobei der Aufnahmebereich (30) eine Vertiefung (30') angrenzend an die Klemmbacke (38) umfasst, wenn sich die Klemme (34) in der geschlossenen Stellung befindet, wahlweise wobei der Gegenstand (32) innerhalb der Vertiefung aufgenommen wird und wenn der Handgriff (20) in einer Richtung, weg von dem Gegenstand, bewegt wird, der Gegenstand (32) dann die Klemmbacke (38) in die offene Stellung zieht und die Klemmbacke (38) dann den Gegenstand (32) hält.

13. Verfahren zum Halten eines Gegenstandes (32), das die folgenden Schritte umfasst:
a. Bereitstellen einer Stichsäge (10) nach einem der vorhergehenden Ansprüche, wobei sich die Klemme (34) in der geschlossenen Stellung befindet,
b. Aufnehmen eines Gegenstandes in dem Aufnahmebereich (30) und
c. Bewegen der Stichsäge derart, dass der Gegenstand (32) die Klemmbacke (38) berührt und die Klemme (34) in die offene Stellung zieht, und wobei die Klemme (34) den Gegenstand (32) hält,
wobei der Gegenstand die Klemme (34), die Schneidklinge (22) und das Gehäuse (24) berührt.

14. Verfahren zum Schneiden eines Gegenstandes (32), das die folgenden Schritte umfasst:
a. Bereitstellen einer Stichsäge (10) nach einem der vorhergehenden Ansprüche, wobei sich die Klemme (34) in der geschlossenen Stellung befindet,
b. Aufnehmen eines Gegenstandes (32) in dem Aufnahmebereich (30),
c. Bewegen der Stichsäge derart, dass der Gegenstand (32) die Klemmbacke (38) berührt und die Klemme (34) in die offene Stellung zieht, und wobei die Klemme (34) den Gegenstand (32) hält, und
d. Schneiden des Gegenstandes (32) mit der Schneidklinge (22),
wobei der Gegenstand die Klemme (34), die Schneidklinge (22) und das Gehäuse (24) berührt.

15. Verfahren nach einem der Ansprüche 13 oder 14, wobei die Stichsäge (10) in einer Richtung, weg von dem Gegenstand (32), bewegt wird, um so die Klemme (34) um das Drehgelenk (36) zu drehen und um dadurch die Klemme (34) in die offene Stellung zu ziehen.

## Revendications

1. Scie alternative (10) pour couper un article, comprenant :
a. une poignée (20) ;
b. une lame de coupe distale par rapport à la poignée (20) ;
c. un châssis (24), entre la poignée (20) et la lame de coupe (22), le châssis (24) contenant un moteur (26) et comprenant une zone de réception (30), la zone de réception (30) pouvant recevoir l'article (32) ;
d. une pince (34) fixée sur le châssis (24), proximale par rapport à la lame de coupe (22), la pince (34) présentant une position ouverte et une position fermée, la pince comportant un pivot (36) et une mâchoire de serrage (38) distale par rapport au pivot (36), dans laquelle, dans la position fermée, la mâchoire de serrage (38) est adjacente à la zone de réception (30), dans laquelle, dans la position ouverte, la mâchoire de serrage (38) n'est pas adjacente à la zone de réception (30), dans laquelle, lors du déplacement de la scie alternative (10), l'article (32) peut être retenu par la pince (34), et dans laquelle la mâchoire de serrage retient l'article (32) contre le châssis (24), et dans laquelle, lorsque l'article (32) est reçu dans la zone de réception (30), **caractérisée en ce que**,
lorsque la poignée (20) est déplacée dans une direction allant à l'écart de l'article, l'article (32) tire la mâchoire de serrage (38) dans la position ouverte, la mâchoire de serrage retenant alors l'article.

2. Scie alternative (10) selon la revendication 1, dans laquelle le châssis (24) comprend en outre un moyen de retenue de la pince (44) pour fixer la pince sur le châssis (24), dans laquelle la mâchoire de serrage (38) retient l'article (32) contre le moyen de retenue de la pince (44).

3. Scie alternative (10) selon l'une quelconque des revendications précédentes, dans laquelle l'article (32) est un article en bois ; dans laquelle l'article en bois est sélectionné optionnellement dans le groupe constitué d'une branche, d'un tuyau, d'un bâton et d'une combinaison de ceux-ci.

4. Scie alternative (10) selon l'une quelconque des revendications précédentes, dans laquelle la mâchoire de serrage (38) retient l'article (32) pendant qu'il est coupé par la lame de coupe (22).

5. Scie alternative (10) selon l'une quelconque des revendications précédentes, dans laquelle la pince (34) est sollicitée vers la position fermée.

6. Scie alternative (10) selon l'une quelconque des revendications précédentes, dans laquelle la pince (34) est fixée de manière permanente sur le châssis (24).

7. Scie alternative (10) selon l'une quelconque des revendications précédentes, dans laquelle la pince (34) est amovible du châssis (24).

8. Scie alternative (10) selon l'une quelconque des revendications précédentes, dans laquelle, lorsque la mâchoire de serrage (34) se trouve dans la position fermée, la mâchoire de serrage (38) fait partie de la zone de réception (30) et dans laquelle la mâchoire de serrage (38) déborde de la zone de réception (30).

9. Scie alternative (10) selon l'une quelconque des revendications précédentes, comprenant en outre un moteur pour entraîner la lame de coupe (22), le moteur étant agencé dans le châssis (24) ; dans laquelle le moteur est optionnellement un moteur électrique (26), et dans laquelle la scie alternative comprend une batterie (40) connectée en service au moteur électrique.

10. Scie alternative (10) selon l'une quelconque des revendications précédentes, dans laquelle le pivot (36) est distal par rapport à la zone de réception (30).

11. Scie alternative (10) selon l'une quelconque des revendications précédentes, comprenant en outre une deuxième pince sur le côté de la lame de coupe (22) opposé à la pince (34) ; dans laquelle la deuxième mâchoire de serrage constitue optionnellement une image symétrique de la mâchoire de serrage (38).

12. Scie alternative (10) selon l'une quelconque des revendications précédentes,
dans laquelle la poignée (20) comprend en outre un crochet (42) ;
et/ou
dans laquelle la zone de réception (30) comprend un renfoncement (30') adjacent à la mâchoire de serrage (38) lorsque la pince (34) se trouve dans la position fermée ; dans laquelle l'article (32) est reçu optionnellement dans le renfoncement, et lorsque la poignée (20) est déplacée dans une direction allant à l'écart de l'article, l'article (32) tire la mâchoire de serrage (38) dans la position ouverte, la mâchoire de serrage (38) retenant alors l'article (32).

13. Procédé de retenue d'un article (32), comprenant les étapes ci-dessous :
a. fourniture d'une scie alternative (10) selon l'une quelconque des revendications précédentes, dans laquelle la pince (34) se trouve dans la position ouverte ;
b. réception d'un article dans la zone de réception (30) ; et
c. déplacement de la scie alternative de sorte que l'article (32) contacte la mâchoire de serrage (38) et tire la pince (34) dans la position ouverte, dans laquelle la pince (34) retient l'article (32) ;
dans lequel l'article contacte la pince (34), la lame de coupe (22) et le châssis (24).

14. Procédé de coupe d'un article (32), comprenant les étapes ci-dessous :
a. fourniture d'une scie alternative (10) selon l'une quelconque des revendications précédentes, dans laquelle la pince (34) se trouve dans la position fermée ;
b. réception d'un article (32) dans la zone de réception (30) ;
c. déplacement de la scie alternative de sorte que l'article (32) contacte la mâchoire de serrage (38) et tire la pince (34) dans la position ouverte, dans laquelle la pince (34) retient l'article (32) ; et
d. coupe de l'article (32) avec la lame de coupe (22) ;
dans lequel l'article contacte la pince (34), la lame de coupe (22) et le châssis (24).

15. Procédé selon l'une des revendications 13 ou 14, dans lequel la scie alternative (10) est déplacé dans une direction allant à l'écart de l'article (32), de sorte à faire tourner la pince (34) autour du pivot (36) et à tirer ainsi la pince (34) dans la position ouverte.
